# EUROPEAN PATENT SPECIFICATION

(11) **EP 1 932 224 B1**
(45) Date of publication and mention of the grant of the patent: **13.07.2016**
(21) Application number: 06799814.6
(22) Date of filing: 26.09.2006
(51) Int. Cl.: H02B 1/052, H01R 4/38, H02B 1/20, H01R 25/14

(54) **CONNECTOR**
VERBINDER
CONNECTEUR

(30) Priority: 26.09.2005 SE 0502128
(43) Date of publication of application: 18.06.2008
(73) Proprietor: ABB AB, 721 83 Västerås (SE)
(72) Inventor: JERKSJÖ, Sven, 441 95 Alingsås (SE)
(74) Representative: Savela, Reino Aleksi
(86) International application number: PCT/SE2006/050351
(87) International publication number: WO 2007/035170

(56) References cited:
- EP-B1- 0 349 782
- WO-A1-91/17595
- WO-A2-02/075889
- DE-A1- 2 456 362
- DE-A1- 4 440 739
- DE-A1- 19 744 977
- FR-A1- 2 664 440

## Description

### TECHNICAL FIELD

The present invention relates to a connector for connection to a busbar with a current-carrying portion, intended for low voltage. In this case, low voltage ≤ 1kV.

### BACKGROUND ART

Cabinets for electronic equipment, and intended for indoor or outdoor installation, for example at a roadside, are used for protecting busbar systems intended for connection of various electrical apparatus at low and medium voltage. The cabinets may, for example, be distribution boards that provide housing areas with current. The busbars in such a busbar system are normally supplied with three-phase current and voltage. The busbars are intended to be voltage-carrying and, when a load such as an electrical apparatus has been connected and put into service, also current-carrying. The busbars may be semi-protected or non-semi-protected. To connect an apparatus to a busbar such that the apparatus may be fed with current, a connector is used. When installing apparatus in a cabinet, a number of simple similar installation operations take place, sometimes under pressure of time. Often, the interior in several cabinets are installed on the same occasion. This places certain demands on the components included, such as connectors, for a rapid, simple and electrically safe installation.

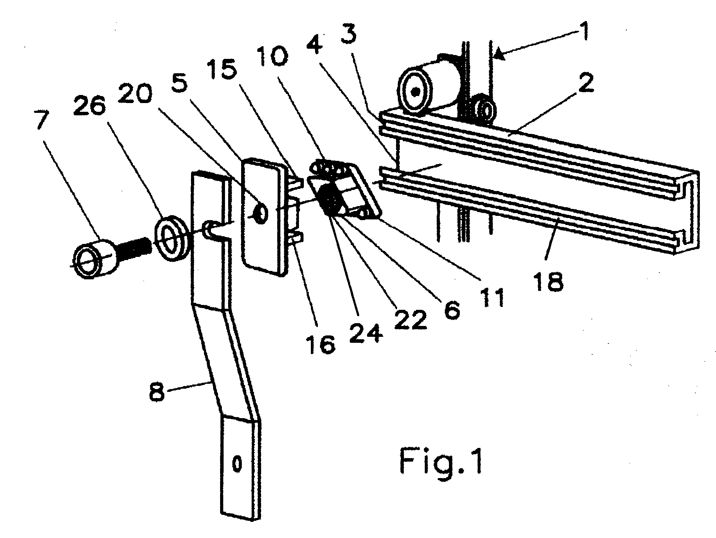

Figure 1 shows an exploded view of a connector 1 according to the prior art, intended to be mounted to a busbar 2 that is to be installed in a cabinet. The busbar is provided with at least one portion 3 adapted to carry current at a load applied thereto, and a T-shaped connection groove 4. The connector comprises a contact part 5 adapted to be connected to the current-carrying portion of the busbar, thus making the contact part current-carrying, a clamping part 6 adapted to cooperate with the contact part for connection to the busbar in the T-shaped groove, and a screw 7 adapted, when being tightened, to clamp the busbar between the contact part and the clamping part. The figure also shows a connecting plate 8 belonging to a current-carrying part of an apparatus (not shown in the figure). The connecting plate is mounted between the screw 7 and the contact part 5. The connector 1 is mounted to the busbar by connecting the screw 7 so as to pass through a hole in the contact part 5, and in the clamping part 6. A torque is applied to the screw 7, that is, a force that rotates the screw is applied to the screw, the clamping part having two protruding parts 10, 11 which are then attached in the T-shaped groove 4 of the busbar. The connecting plate 8 now has galvanic contact with the contact part 5. In this way, current may be applied to the apparatus from the busbar 2 via the contact part 5.

One problem with the above-mentioned mounting is to determine whether the protruding portions 10, 11 of the clamping part are attached in the T-shaped groove 4 in the busbar or not. For example, if an apparatus comprises several connecting plates 8 with associated connectors 1, it is sufficient if one connector is attached to the busbar for the apparatus to be mechanically attached to the busbar 2. The other connectors may then be incorrectly mounted with the screw 7 tightened and with the protruding parts 10, 11 of the clamping part 6 placed along the extent of the busbar in such a way that they have not engaged into the T-shaped groove 4 of the busbar without the fitter having detected this. This is a safety risk since an electrical breakdown, such as for example overheating or arcing, may then arise with an ensuing fire because the faulty installation leads to a deficient galvanic contact. To prevent such an occurrence, the contact part 5, according to the prior art, comprises an inspection hole (not shown in the figure) to check that the clamping part has been rotated into the correct position. In case of poor illumination, for example, or when part of an apparatus blocks the hole, ocular inspection may still be difficult for the fitter. If the connector has been tightened until a prescribed torque is achieved but the fitter's view is blocked, an incorrect installation may be left undetected, which may lead to the above-described electrical breakdown with the ensuing consequences.

For the above reasons, there is a need to improve connectors according to the prior art.

WO 91/17595 discloses an adapter for coupling current collector rails. The adapter provides a simultaneous electrical and mechanical connection between two C-shaped current collector rails and comprises a hook with a shaft and a cross piece and a cooperating contact block. The latter has a guide bore receiving the shaft of the hook so that it is prevented from rotation. The shaft projects through the slot in the current collector rail and is contoured to allow limited rotation relative to the latter.

### SUMMARY OF THE INVENTION

The object of the invention is to provide a connector of the initially described kind, which allows a rapid, simple and electrically safe mounting operation.

This object is achieved by a connector as defined in claim 1.

The connector is adapted for connection to a busbar with at least one current-carrying portion. The connector comprises a contact part adapted to be connected to said current-carrying portion such that the contact part becomes current-carrying, a clamping part adapted to cooperate with the contact part for connection to the busbar, and a screw adapted, when being tightened, to clamp the busbar between the contact part and the clamping part. Such a connector exhibits the special features that the screw and the clamping part are arranged such that the screw is freely rotatable relative to the clamping part when the contact part and the clamping part are in a first position relative to each other, which is incorrect for tightening, and the screw and the clamping part are adapted such that the screw engages with the clamping part when the contact part and the clamping part are in a second position relative to each other, which is correct for tightening.

One advantage of the new design of the screw and the clamping part is, among other things, that this gives the fitter a simple confirmation that the clamping part has reached a correct position and hence that a safe contact has been achieved. The fitter's instruction is to apply a torque to the screw until a specified tightening torque is achieved. If the clamping part, for some reason, should not be rotated into the correct position but ends up in an incorrect position such that the clamping part is not secured to the busbar, then the screw will turn freely. The fitter then directly notices that the connector is incorrectly installed since a tightening torque cannot be achieved.

In another preferred embodiment of a connector according to the invention, said screw comprises a first portion adapted to engage into the clamping part and a second portion adapted to run freely through the clamping part. The advantage is that, in case of faulty installation, this causes the screw to turn freely since the screw cannot engage with the clamping part when the first portion of the screw has passed through the clamping part and it becomes clear that a faulty installation has been carried out.

In a further preferred embodiment of a connector according to the invention, said clamping part comprises a body with a through-hole and the wall of the body adjoining the hole comprises a first portion provided with threads and the first portion of the screw is provided with threads adapted to cooperate with the threads in the first portion of the clamping part, and the second portion of the screw has a diameter that is smaller than the inner diameter for the threads in the first portion of the clamping part such that the second portion of the screw may run freely through the clamping part. The advantage is that the screw can only be connected in its entirely with a specified tightening torque when the protruding portions of the clamping part are attached to the T-shaped groove of the busbar. When the second unthreaded portion of the screw instead cooperates with the first threaded portion of the clamping part, the screw spins freely and hence indicates that the connector has been connected in an incorrect position.

In yet another preferred embodiment of a connector according to the invention, the second portion of said wall has a smooth surface. This is an advantage since the screw is guided when being inserted into the clamping part since the surface of the wall cooperates with the surface of the third portion of the screw. Another advantage is that the threads in the first threaded portion of the screw cannot hook into the second portion of the clamping part when the first portion of the screw has passed the second portion of the clamping part when the screw is inserted.

In still another preferred embodiment of a connector according to the invention, the screw comprises a third portion and said wall adjoining the hole also comprises a second portion adapted to cooperate with the third portion of the screw to guide the screw. This is an advantage when returning the connector to a starting position at the busbar when a faulty connection has been performed and is to be corrected to a correct connection.

In yet a further preferred embodiment of a connector according to the invention, the connector comprises an O-ring arranged at the second portion of the screw between the clamping part and the screw to create friction between the clamping-part-and-the screw when inserting the screw into the clamping part. One advantage of utilizing an O-ring is that sufficiently high friction is created for the introduction of the clamping part into the T-shaped groove of the busbar.

In still a further preferred embodiment of a connector according to the invention, a spring means is mounted between the contact part and the clamping part, said spring means acting with a force on the clamping part so that the threaded first portion of the clamping part engages into the threaded first portion of the screw when unscrewing the screw. One advantage of the connector comprising a spring means is that it all the time pushes apart the clamping part and the contact part. Because the spring means presses the clamping part against the threaded portion of the screw, the screw can simply be reversed a number of turns so that, when being tightened, the clamping part is given the possibility of being rotated into the T-shaped groove in the busbar. Another advantage is that the spring means is utilized for creating friction between the rotating parts and the contact part, which permits the clamping part to be placed in a position with the protruding portions positioned in parallel with the busbar when the clamping part is to enter the busbar.

In still another preferred embodiment of a connector according to the invention, the spring means comprises a body formed from a helical wire into a conical shape. This is an advantage since, because of this, all the turns of the cone-shaped spiral may be in the same plane and may thus be made compact so that the spring means occupies a smaller space after tightening of the screw.

In an additional preferred embodiment of a connector according to the invention, said spring means is cylindrical and has turns of plane thin, wave-shaped tapes. This is also an advantage since this causes the cylinder to become compact after the tightening torque as the cylinder consists of plane thin tapes and hence requires little space.

Advantageous developments of the invention will become clear from the following description and the appended claims.

### BRIEF DESCRIPTION OF THE DRAWINGS

The invention will be explained in greater detail by description of an embodiment with reference to the accompanying drawings, wherein
- Figure 1: shows an exploded view of a connector according to the prior art,
- Figure 2: shows an exploded view of a connector according to one embodiment of the invention,
- Figure 3: shows a screw in more detail, associated with the connector of Figure 2,
- Figure 4: shows a clamping part in more detail, associated with the connector of Figure 2,
- Figure 5A: shows a spring means in more detail, associated with the connector of Figure 2,
- Figure 5B: shows an alternative embodiment of the spring means shown in Figure 2,
- Figure 6: shows a side view of the connector shown in Figure 2, correctly mounted to a busbar,
- Figure 7: shows a side view of the connector shown in Figure 2, incorrectly mounted to a busbar,
- Figure 8A: shows a section through the connector in the starting position,
- Figure 8B: shows a section through the connector when installation is in progress,
- Figure 8C: shows a section through the connector of Figure 6,
- Figure 9A: shows a section through the connector in the starting position,
- Figure 9B: shows a section through the connector of Figure 7.

### DESCRIPTION OF PREFERRED EMBODIMENTS

Figure 1 shows an exploded view of a connector 1 according to the prior art, intended to be mounted to a busbar 2 in a cabinet. The busbar is provided with at least one current-carrying portion 3 and a T-shaped connecting groove 4. The connector comprises a contact part 5 adapted to connect to the current-carrying portion 3 of the busbar, thus making the contact part current-carrying, a clamping part 6 adapted to cooperate with the contact part 5 for connection to the busbar in the T-shaped groove, and a screw 7 adapted, when being tightened, to clamp the busbar between the contact part 5 and the clamping part 6. The figure also shows a connecting plate 8 belonging to a current-carrying part of an apparatus, not shown in the figure. The connecting plate may have a different design. The connecting plate is mounted between the screw 7 and the contact part 5. To this end, the contact part 5 is provided with at least one tongue 15, 16 intended to fit into the current-carrying portions 3, 18 in the-busbar. The clamping part 6 is in this case shaped with two protruding portions 10, 11 intended to fit into the T-shaped groove 4. The contact part 5 is provided with a through-hole 20. Also the clamping part 6 is provided with a through-hole 22. The hole in the clamping part 6 is provided with threads 24. The screw 7 is connected to the clamping part passing through a hole in the clamping part 6. This causes the two protruding portions 10, 11 of the clamping part to be brought into the T-shaped groove 4 of the busbar when a torque is applied to the screw 7. In this way, the clamping part 6 is fixed into the T-shaped groove 4. By applying additional torque to the screw 7 until sufficient torque to fix the connector 1 to the busbar 2 has been achieved, the tongues 15, 16 of the contact part 5 are pressed against the current-carrying portions 3, 18 of the busbar 2. When the connector 1 is thus mounted to the busbar 2, the connecting plate 8 has galvanic contact with the contact part 5, which in turn is in galvanic contact with the current-carrying portions 3, 18 in the busbar 2. Thus, current can be applied to the apparatus from the busbar 2 via the contact part 5. The figure also shows a washer 26 placed between the screw and the connecting plate.

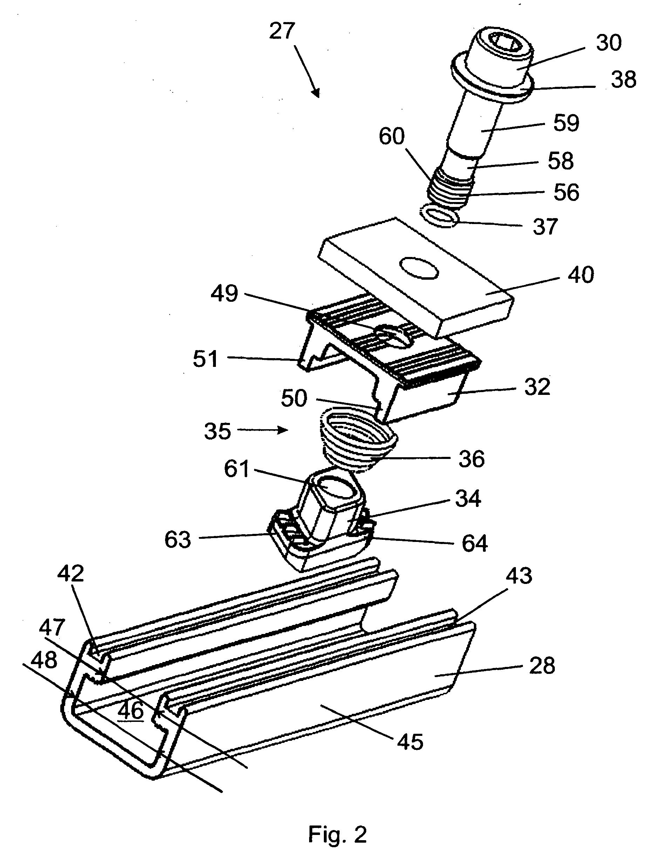

Figure 2 shows an exploded view of an embodiment of a connector 27 according to the invention for connection to a busbar 28. The busbar 28 is preferably mounted in a cabinet (not shown in the figure). The connector comprises a number of separate structural members. To fix the connector in the busbar, a screw 30, a contact part 32 and a clamping part 34 are employed. The contact part 32 is the kind previously described. This embodiment of a connector includes a spring means 35 comprising a compression spring 36. In addition, this embodiment of a connector comprises various mounting parts, such as an O-ring 37 and a washer 38. The O-ring 37 is adapted to create friction between the screw 30 and the clamping part 34, so that also a small torque may be transferred between the screw and the clamping part. The figure also shows a connecting plate 40 belonging to the current-carrying portion of an apparatus (not shown in the figure), or for connection of another current-carrying busbar for feeding current to the busbar 28 connected to the cabinet. The washer 38 is placed between the screw 30 and the connecting plate 40. The washer 38 has a resilient function.

The busbar 28 is elongated. The busbar 28 is provided with two current-carrying portions 42, 43. Also in this case, the busbar 28 has an insulating coating 45 on the remaining portions, the purpose of which is to act as semi-protection for the fitter. The busbar has a T-shaped connecting groove 46, with a narrower passage section 47 of the T-shape being open, adapted for passage of the clamping part 34. The connecting groove 46 in the busbar 28 also has a wider gripping section 48. A connector 27 according to the invention may also be connected to and employed for mounting to an uninsulated busbar.

The contact part 32 has a body with a through-hole 49 adapted to be passed through by the screw, and two portions 50, 51 protruding from the body, referred to as tongues in the following, each being arranged on respective sides of the hole and adapted to connect to the current-carrying portions 42, 43 of the busbar 28. The contact part is made of an electrically conductive material, for example of metal.

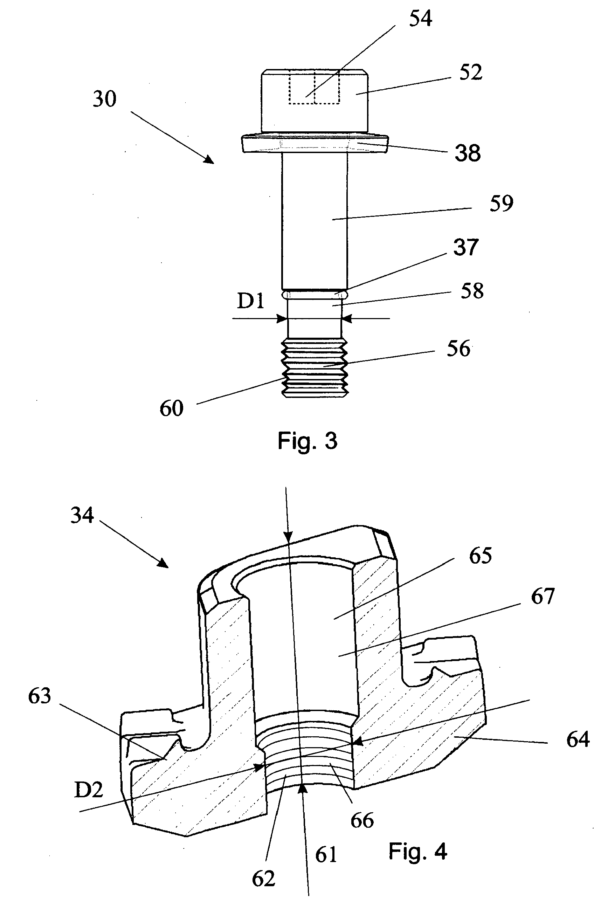

Figure 3 shows the screw 30. The screw has an elongated cylinder-shaped body and is provided at one end with a screw head 52 comprising a notch 54 for a tool to apply a torque to the screw. The screw body comprises a first portion 56 adapted to engage into the clamping part, a second portion 58 adapted to run freely through the clamping part, and a third portion 59 adapted to pass partly through the clamping part. The second portion 58 is arranged between the first 56 and third 59 portions. The first portion 56 is provided with threads 60 adapted to engage into corresponding threads in the clamping part. The second portion 58 is referred to as the waist in the following and has a smaller diameter D1 than the first portion and the third portion. The second portion 58 is unthreaded and has an essentially smooth surface. The third portion 59 is unthreaded and has an essentially smooth surface. The first threaded portion 56 is arranged near the second end of the screw, and the third portion 59 is arranged inside the screw head 52. The diameter of the waist 58 of the screw is adapted to the inner diameter of the O-ring 37, also shown in the figure. The O-ring is utilized to create friction between the screw 30 and the clamping part 34. The screw is rotationally symmetrical. The screw is, for example, made of a metal.

Figure 4 shows a cross section of the clamping part 34. The clamping part 34 has a body with a through-hole 61 adapted to be passed through by the screw. In this embodiment, the clamping part comprises, at one end, two protruding portions 63, 64, referred to as wings in the following, each being arranged on respective sides of the hole and intended to fit into the wider gripping section 48 of the T-shaped groove 46 in the busbar 28. The total length of the wings exceeds the width of the opening in the passage portion 47. The clamping part is intended to pass through the passage portion 47 of the T-groove, and the width of the wings 63, 64 is therefore smaller than the width of the opening in the passage portion 47. In this case, the wings 63, 64 are jointly shaped as a rhomboid. The inner wall 65 of the hole is rotationally symmetrical. The inner wall 65 of the hole has a threaded portion 66 and an unthreaded portion 67, as shown in Figure 4. The threaded wall portion 66 of the clamping part is adapted to receive the cylindrical, threaded first portion 56 of the screw 30. The inner diameter D2 of the threads 62 of the clamping part is adapted to receive the waist 58 of the screw when the first threaded portion 56 of the screw has passed through the threaded portion 66 of the clamping part. The unthreaded wall portion 67 of the clamping part is adapted to receive the cylindrical, unthreaded third portion 59 of the screw 30 to create good guidance between the clamping part and the screw, when the threaded first portion 56 of the screw, upon application of torque, has passed through the clamping part 34.

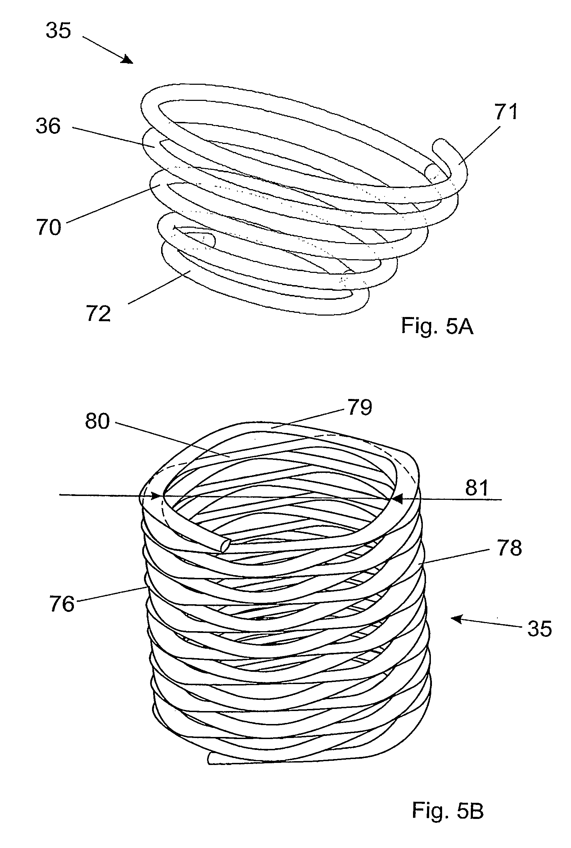

Figure 5A shows an embodiment of a spring means 35 consisting of the compression spring 36. The compression spring in this embodiment has a body of a helical wire 70. The compression spring in this embodiment is conical, which means that all the turns of the coil spring may be compressed into one plane without the concentric turns crossing each other. The outermost turn 71 of the coil spring is adapted to the diameter of the screw head 52. The innermost turn 72 of the coil spring has an inner diameter that is adapted to the unthreaded third portion 59 of the screw 30. The compression spring 36 is adapted to press apart the clamping part 34 and the contact part 32 when the threaded first portion 56 of the screw has passed through the clamping part 34 and hence to return the threaded portion 66 of the clamping part 34 against the first threaded portion 56 of the screw, so that the threads 60, 62 engage into each other again. The compression spring 36 is also adapted to create friction between the contact part 32 and the rotating parts, the screw 30 and the clamping part 34, when placing the connector 27 in the starting position at the busbar 28.

Figure 5B shows an additional embodiment of a spring means 35 consisting of another compression spring 76. The compression spring 76 in this embodiment has a cylindrical body of flat concentric tapes 78 in rings. The flat tapes of the compression spring 76 are wave-formed in the plane of the tape. The tapes 78 are composed so that the wave troughs of the first tape 79 are mounted together with the crests of the second tape 80, and a similar arrangement is made for the following turns of the tape. The inner diameter 81 of the coil spring is adapted for passage of the unthreaded third portion 59 of the screw 30. The compression spring 76 in this embodiment is adapted, in the same way as the previously described compression spring, to press the threaded portion 66 of the clamping part against the threaded portion 56 of the screw so that the respective threads 60, 62 engage into each other, and to create friction between the contact part 32 and the rotating parts, the screw 30 and the clamping part 34, when being placed in the starting position at the busbar 28.

Also other embodiments of a spring means may be employed, such as for example an ordinary cylindrical helical spring.

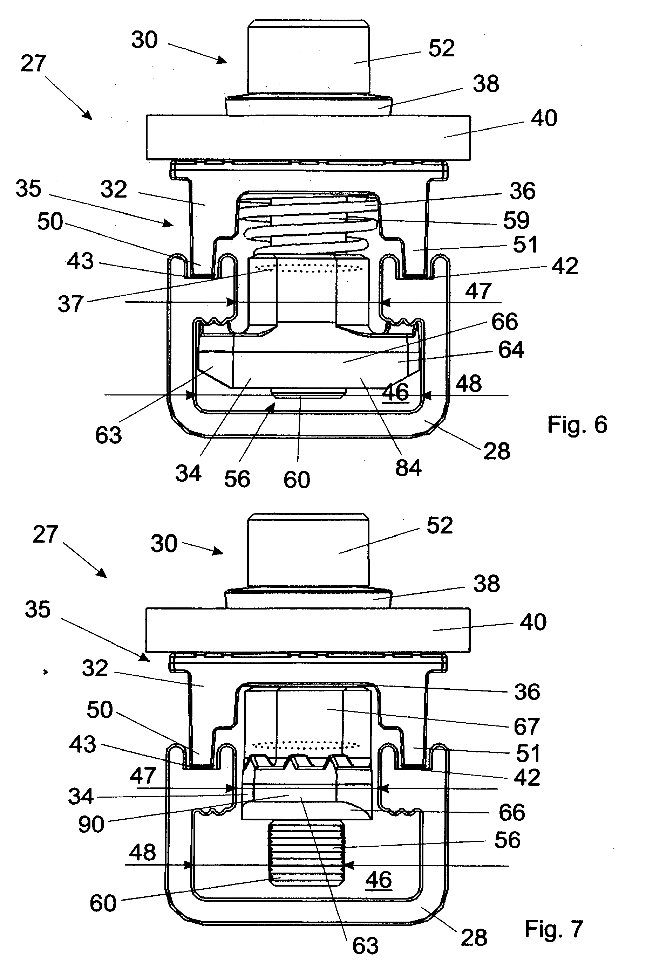

Figure 6 shows the connector 27, as viewed from the side, installed in the correct position. A correct position means that the connector 27 is installed at the busbar 28 so that the wings 63, 64 of the clamping part 34 are attached in a position opposite to the extent of the busbar 28 so that the clamping part is secured to the wider gripping section 48 of the T-shaped groove 46 of the busbar. The threaded first portion 56 of the screw faces and cooperates with the threaded portion 66 of the clamping part 34 so that the respective threads 60, 62 engage into each other. The waist 58 of the screw is on a level with the unthreaded portion 67 of the clamping part 34. A correct position further means that the two tongues 50, 51 of the contact part are connected to the current-carrying portions 42, 43 of the busbar in an electrically safe manner. This sketch shows the long side 84 of the outside of the clamping part from one wing 63 to the other wing 64 and the outside of the screw 30. In addition, it shows how the spring means 35 surrounds the screw 30 placed between the contact part 32 and the clamping part 34. In this embodiment, the spring means 35 is the compression spring 36, but the spring means may also be another compression spring, such as the one shown in Figure 5B, or a common helical spring. The opposed long side of the clamping part has the same appearance as the long side 84 shown.

Figure 7 shows the connector 27, as viewed from the side, installed in an incorrect position. An incorrect position means that the connector 27 is installed at the busbar 28 such that the wings 63, 64 of the clamping part are placed in a position coinciding with the extent of the busbar, so that it has been possible to bring the clamping part up into the narrower passage portion 47 of the T-shaped groove 46 of the busbar, and hence the wings 63, 64 of the clamping part are not fixed to the busbar 28 in a mechanically safe manner. Thus, the threaded first portion 56 of the screw has passed the clamping part 34 in the incorrect position, and the clamping part 34 is on a level with the unthreaded portions 58, 59 of the screw so that the threaded portion 66 of the clamping part 34 is facing the waist 58 of the screw. Thus, the two tongues 50, 51 of the contact part are not connected to the current-carrying portions 42, 43 of the busbar in an electrically safe manner. This implies that the screw 30 is not attached but the screw is spinning freely with only the friction between the screw 30 and the O-ring 37 as resistance to torques regardless of the magnitude of the torque that is applied to the screw. This sketch shows the short side 90 of the outside of the clamping part as the short side of one of the wings 63. The opposite short side has a similar appearance. The incorrect position arises when the wings 63, 64 of the clamping part are placed in a position coinciding with the extent of the busbar when a torque is applied to the screw 30 so that the wings 63, 64 are brought up into the narrower passage portion 47 of the T-shaped groove 46 of the busbar.

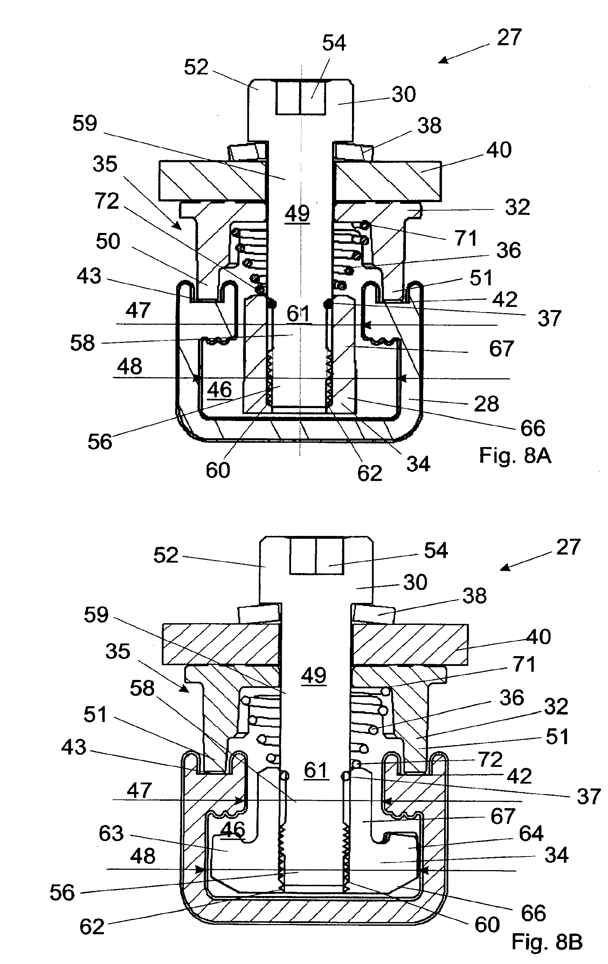

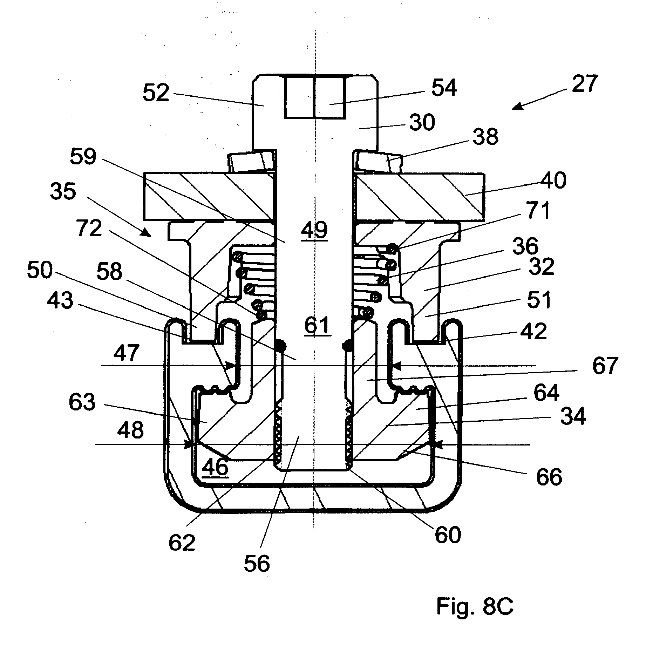

Figures 8A, 8B and 8C together show the performance of a correct connection to a busbar 28 with a connector 27.

Figure 8A shows a section of a connector in the starting position, before the clamping part is attached in the correct position. The mounting of the constituents included takes place in the following order: The waist 58 of the screw 30 is provided with an O-ring 37 and a washer 38. Then the screw 30 is connected to the connecting plate 40. Next, the contact part 32 is applied onto the screw via the through-hole 49 in the contact part. Thereafter, the spring 36, 76 and then the clamping part 34 are applied to the screw via the through-hole 61 in the clamping part. This installation is normally performed in advance on the apparatus. The task of the fitter is normally to install an apparatus with associated pre-assembled connectors to a busbar. Thus, the fitter starts by placing the connector 27 at the busbar 28 in the starting position.

The fact that the connector 27 is placed at the busbar 28 in the starting position means that the tongues 50, 51 of the contact part are placed in the current-carrying portions 42, 43 of the busbar 28 and that the clamping part is placed in the narrower passage portion 47 of the T-shaped groove 46 of the busbar, so that the wings 63, 64 of the clamping part 34 are placed in a position coinciding with the extent of the busbar. The wings 63, 64 of the clamping part 34 are placed, in the starting position, in the wider gripping section 48 in the T-shaped groove 46 in the busbar 28. The spring means comprising the compression spring 36, 76 or a helical spring is employed in the starting position to create friction between the rotating parts, the screw 30 and the clamping part 32 and the contact part 34, which permits the clamping part 32 to be placed in a position with the wings 63, 64 placed in parallel with the longitudinal extent of the busbar 28 when they are to enter into the T-shaped groove 46 of the busbar.

From the starting position, a torque is applied to the screw. Figure 8B shows a cross section of a connector 27 immediately after the torque has been applied to the screw. Since the screw 30 is attached to the clamping part 34 in that the respective threads 60, 62 engage into each other, the torque acts on the clamping part 34 such that the two wings 63, 64 are rotated in a position opposite to the extent of the busbar so that the wings 63, 64 enter into the wider gripping section 48 in the T-shaped groove 46 in the busbar 28. The O-ring creates a friction between the screw and the clamping part so that also a small torque may be transmitted between the screw and the clamping part.

From the starting position, the connector 27 and hence the clamping part 34 are brought to become attached in a correct position. Figure 8C is a cross-sectional view of a connector 27 after the connector and hence the clamping part 34 have been brought into the correct position. After the two wings 63, 64 of the clamping part 34 have been rotated into a position opposite to the extent of the busbar, so that the wings 63, 64 enter the wider gripping section 48 in the T-shaped groove 46 in the busbar 28, additional torque is applied to the screw 30 so that the wings are brought to become attached in the correct position. Thereafter, the connector 27 is tightened to the prescribed torque, which is a sufficient torque to fix the connector 27 to the busbar 28. Since tightening to the prescribed torque is possible in this case, the fitter is thus given confirmation that the mounting of the connector is correctly carried out.

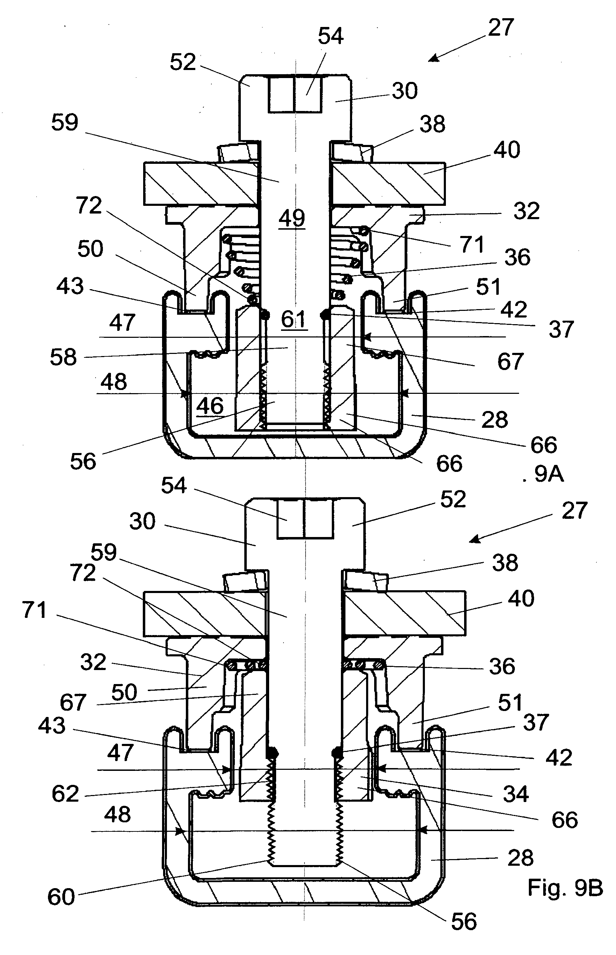

Figures 9A and 9B instead jointly show the performance of an incorrect connection to a busbar 28 with a connector 27. Figure 9A show a section of a connector in the starting position as described in the text describing Figure 8A.

From the starting position, the connector 27 and hence the clamping part 34 may be brought into an incorrect position. Figure 9B is a cross-sectional view of a connector 27 after the connector and hence the clamping part 34 have been brought into an incorrect position. The connector 27 and hence the clamping part 34 are brought into an incorrect position by applying a torque to the screw 30 when the connector 27 is in the starting position. The screw 30 is attached to the clamping part 34 and the clamping part is thus brought closer to the screw head when the torque is applied. If the two wings 63, 64 then pass through the wider gripping section 48 in the T-shaped groove 46 in the busbar 28 and instead enter into the narrower passage portion 47, the clamping part 34 will not be attached in the T-shaped groove 46 of the busbar. The extent of the wings 63, 64 hence coincides with the extent of the busbar. The threaded first portion 56 of the screw has thus passed through the clamping part 34 and hence the clamping part 34 is on a level with the unthreaded portions 58, 59 of the screw. If, thereafter, the connector 27 is tightened further, the screw will not be attached but the screw will be spinning freely with only the friction that arises between the screw 30 and the O-ring 37 as resistance to torque, since the threaded portion 66 of the clamping part 34 is positioned opposite to the waist 58 of the screw. The fitter then directly notices that the tightening torque cannot be reached. Hence, the fitter is given confirmation that the installation of the connector 27 has not been correctly carried out but is in an incorrect position.

This incorrect position is reversible. In the incorrect position, the compression spring 36, 76 or the helical spring is compressed to a maximum during tightening. Since the compression spring 36, 76 or the helical spring is mounted between the clamping part 34 and the contact part 32, the compression spring 36, 76 or the helical spring is thus utilized to create a friction between the contact part 32 and the rotating parts, that is, the screw 30 and the clamping part 34. To this end, also the O-ring 37, which is arranged at the second portion 58 of the screw 30 between the clamping part 34 and the screw, is utilized to create a friction between the clamping part and the screw to be able to reinsert the screw into the clamping part. The cylindrical, unthreaded third portion 59 of the screw fits well to the unthreaded portion 67 of the clamping part to create good guidance between the clamping part 34 and the screw 30. The compression spring 36, 76 or the helical spring presses apart the clamping part 34 and the contact part 32 and hence presses the threaded portion 66 of the clamping part 34 against the first, threaded portion 56 of the screw, so that the threads 60, 62 engage into each other. Thus, by rotating the screw 30 a number of times in a direction opposite to the direction during installation, the connector 27 thus returns to the starting position. From the starting position, tightening of the connector may take place in a correct manner, as described in the text describing Figures 8A and 8B, into the correct position.

The invention is not limited to the embodiments shown, but the person skilled in the art may, of course, modify it in a plurality of ways within the scope of the invention as defined by the claims. Thus, a different shape of the compression spring, the screw, or the clamping part may be utilized.

## Claims

1. A connector (27) for connection to a busbar (28) with at least one current-carrying portion (42, 43), said connector comprising a contact part (32) adapted for connection to said current-carrying portion so that the contact part becomes current-carrying, a clamping part (34) adapted to cooperate with the contact part for connection to the busbar, and a screw (30) adapted, when being tightened, to clamp the busbar between the contact part and the clamping part, the screw (30) comprises a first portion (56) and a second portion (58), the clamping part comprises a body with a through-hole (61) and that the wall (65) of the body adjoining the hole comprises a first portion (66) having a diameter (D2), the first portion of the screw adapted to engage into the first portion of the clamping part (34), **characterized in that** the second portion of the screw has a diameter (D1) smaller than the diameter (D2) of the first portion of the clamping part (34) so that the screw is freely rotatable relative to the clamping part when the first portion (56) of the screw (30) has passed the clamping part and thus is in an incorrect tightening position.

2. A connector according to claim 1, **characterized in that** the first portion (66) of the clamping part (34) is provided with threads (62) and that the first portion (56) of the screw is provided with threads (60) adapted to cooperate with the threads in the first portion of the clamping part.

3. A connector according to claim 2, **characterized in that** the screw comprises a third portion (59) and that said wall (65) adjoining the hole also comprises a second portion (67) adapted to cooperate with the third portion (59) of the screw to guide the screw.

4. A connector according to claim 3, **characterized in that** the second portion (67) of said wall (65) has a smooth surface.

5. A connector according to any of claims 2-4, **characterized in that** it comprises a spring means (35, 36, 76) mounted between the contact part and the clamping part, the spring means acting with a force on the clamping part so that the threaded first portion of the clamping part engages with the threaded first portion of the screw when unscrewing the screw.

6. A connector according to claim 5, **characterized in that** the spring means (35, 36) comprises a body formed from a helical wire (70) in a conical shape.

7. A connector according to any of the preceding claims, **characterized in that** it comprises an O-ring (37) arranged at the second portion (58) of the screw (30) between the clamping part (34) and the screw to create friction between the clamping part and the screw when inserting the screw into the clamping part.

## Patentansprüche

1. Verbinder (27) zum Verbinden mit einer Sammelschiene (28) mit wenigstens einem stromführenden Abschnitt (42, 43), wobei der Verbinder einen Anschlussteil (32), der für eine Verbindung mit dem stromführenden Abschnitt ausgelegt ist, so dass der Anschlussteil stromführend wird, einen Klemmteil (34), der ausgelegt ist, um mit dem Anschlussteil für eine Verbindung mit der Sammelschiene zusammenzuwirken, und eine Schraube (30), die ausgelegt ist, um die Sammelschiene zwischen dem Anschlussteil und dem Klemmteil einzuklemmen, wenn sie angezogen wird, umfasst, wobei die Schraube (30) einen ersten Abschnitt (56) und einen zweiten Abschnitt (58) umfasst, der Klemmteil einen Körper mit einem Durchgangsloch (61) umfasst und die an das Loch anschließende Wand (65) des Körpers einen ersten Abschnitt (66) mit einem Durchmesser (D2) umfasst, wobei der erste Abschnitt der Schraube ausgelegt ist, um mit dem ersten Abschnitt des Klemmteils (34) ineinanderzugreifen, **dadurch gekennzeichnet, dass** der zweite Abschnitt der Schraube einen Durchmesser (D1) aufweist, der kleiner als der Durchmesser (D2) des ersten Abschnitts des Klemmteils (34) ist, so dass die Schraube bezogen auf den Klemmteil uneingeschränkt drehbar ist, wenn der erste Abschnitt (56) der Schraube (30) den Klemmteil passiert hat und sich somit in einer für das Anziehen falschen Position befindet.

2. Verbinder nach dem Anspruch 1, **dadurch gekennzeichnet, dass** der erste Abschnitt (66) des Klemmteils (34) mit einem Gewinde (62) versehen ist und dass der erste Abschnitt (56) der Schraube mit einem Gewinde (60) versehen ist, das ausgelegt ist, um mit dem Gewinde im ersten Abschnitt des Klemmteils zusammenzuwirken.

3. Verbinder nach dem Anspruch 2, **dadurch gekennzeichnet, dass** die Schraube einen dritten Abschnitt (59) umfasst und dass die an das Loch anschließende Wand (65) ebenfalls einen zweiten Abschnitt (67) umfasst, der ausgelegt ist, um mit dem dritten Abschnitt (59) der Schraube zusammenzuwirken, um die Schraube zu führen.

4. Verbinder nach dem Anspruch 3, **dadurch gekennzeichnet, dass** der zweite Abschnitt (67) der Wand (65) eine glatte Oberfläche aufweist.

5. Verbinder nach einem beliebigen der Ansprüche 2-4, **dadurch gekennzeichnet, dass** er eine Federvorrichtung (35, 36, 76) umfasst, die zwischen dem Anschlussteil und dem Klemmteil montiert ist, wobei die Federvorrichtung eine Kraft auf den Klemmteil ausübt, so dass der ein Gewinde aufweisende erste Abschnitt des Klemmteils mit dem ein Gewinde aufweisenden ersten Abschnitt der Schraube beim Lösen der Schraube ineinandergreift.

6. Verbinder nach dem Anspruch 5, **dadurch gekennzeichnet, dass** die Federvorrichtung (35, 36) einen aus einem Spiraldraht (70) gebildeten kegelförmigen Körper umfasst.

7. Verbinder nach einem beliebigen der vorstehenden Ansprüche, **dadurch gekennzeichnet, dass** er einen O-Ring (37) umfasst, der am zweiten Abschnitt (58) der Schraube (30) zwischen dem Klemmteil (34) und der Schraube angeordnet ist, um zwischen dem Klemmteil und der Schraube Reibung zu erzeugen, wenn die Schraube in den Klemmteil eingeführt wird.

## Revendications

1. Connecteur (27) pour la connexion d'une barre omnibus (28) avec au moins une partie de conduction de courant (42, 43), ledit connecteur comprenant une partie de contact (32) apte à être connectée à ladite partie de conduction de courant de telle sorte que la partie de contact devienne conductrice, une partie de serrage (34) apte à coopérer avec la partie de contact pour établir la connexion à la barre omnibus, et une vis (30) apte, lorsqu'elle est serrée, à serrer la barre omnibus entre la partie de contact et la partie de serrage, la vis (30) comprenant une première partie (56) et une deuxième partie (58), la partie de serrage comprenant un corps comportant un trou traversant (61), et la paroi (65) du corps contiguë au trou comprenant une première partie (66) présentant un diamètre (D2), la première partie de la vis étant apte à s'engager dans la première partie de la partie de serrage (34), **caractérisé en ce que** la deuxième partie de la vis présente un diamètre (D1) plus petit que le diamètre (D2) de la première partie de la partie de serrage (34), de telle sorte que la vis soit libre de tourner par rapport à la partie de serrage lorsque la première partie (56) de la vis (30) a passé la partie de serrage et se trouve donc dans une position de serrage incorrecte.

2. Connecteur selon la revendication 1, **caractérisé en ce que** la première partie (66) de la partie de serrage (34) comporte des filets (62), et **en ce que** la première partie (56) de la vis comporte des filets (60) aptes à coopérer avec les filets de la première partie de la partie de serrage.

3. Connecteur selon la revendication 2, **caractérisé en ce que** la vis comprend une troisième partie (59), et **en ce que** ladite paroi (65) contiguë au trou comprend également une deuxième partie (67) apte à coopérer avec la troisième partie (59) de la vis afin de guider la vis.

4. Connecteur selon la revendication 3, **caractérisé en ce que** la deuxième partie (67) de ladite paroi (65) présente une surface lisse.

5. Connecteur selon l'une quelconque des revendications 2 à 4, **caractérisé en ce qu'**il comprend des moyens de ressort (35, 36, 76) montés entre la partie de contact et la partie de serrage, les moyens de ressort agissant avec une force sur la partie de serrage de telle sorte que la première partie filetée de la partie de serrage s'engage avec la première partie filetée de la vis lorsque l'on dévisse la vis.

6. Connecteur selon la revendication 5, **caractérisé en ce que** les moyens de ressort (35, 36) comprennent un corps formé à partir d'un fil hélicoïdal (70) sous une forme conique.

7. Connecteur selon l'une quelconque des revendications précédentes, **caractérisé en ce qu'**il comprend un joint torique (37) qui est agencé au niveau de la deuxième partie (58) de la vis (30) entre la partie de serrage (34) et la vis de manière à engendrer un frottement entre la partie de serrage et la vis lorsque l'on insère la vis dans la partie de serrage.
